# EUROPEAN PATENT SPECIFICATION

(11) **EP 2 085 419 B1**
(45) Date of publication and mention of the grant of the patent: **16.07.2014**
(21) Application number: 07830596.8
(22) Date of filing: 25.10.2007
(51) Int. Cl.: C08G 77/442, C08C 19/25, C08F 8/42, C08L 15/00, C08L 83/10

(54) **PROCESS FOR PRODUCING MODIFIED POLYMER, MODIFIED POLYMER OBTAINED BY THE PROCESS, AND RUBBER COMPOSITION CONTAINING THE SAME**
VERFAHREN ZUR HERSTELLUNG VON MODIFIZIERTEM POLYMER, NACH DEM VERFAHREN ERHALTENES MODIFIZIERTES POLYMER UND KAUTSCHUKZUSAMMENSETZUNG DAMIT
PROCÉDÉ DE PRODUCTION D'UN POLYMÈRE MODIFIÉ, POLYMÈRE MODIFIÉ OBTENU PAR CE PROCÉDÉ ET COMPOSITION DE CAOUTCHOUC CONTENANT CELUI-CI

(30) Priority: 25.10.2006 JP 2006289456
(43) Date of publication of application: 05.08.2009
(73) Proprietor: JSR Corporation, Tokyo 104-8410 (JP); Bridgestone Corporation, Tokyo 104-8340 (JP)
(72) Inventor: SONE, Takuo, Chuo-ku Tokyo 1048410 (JP); MATSUMOTO, Takaomi, Chuo-ku Tokyo 1048410 (JP); TANI, Kouichirou, Chuo-ku Tokyo 1048410 (JP); MASAKI, Koji, Kodaira-shi Tokyo 1870031 (JP); TANAKA, Ken, Kodaira-shi Tokyo 1870031 (JP)
(74) Representative: TBK
(86) International application number: PCT/JP2007/070862
(87) International publication number: WO 2008/050851

(56) References cited:
- EP-A1- 1 462 459
- WO-A1-91/06580
- WO-A1-03/046020
- WO-A1-03/048216
- WO-A1-03/087171
- WO-A1-2006/030806
- WO-A1-2006/101025
- WO-A1-2006/101025
- WO-A1-2007/040252
- JP-A- 51 140 950
- JP-A- 60 049 077
- JP-A- 62 043 460
- JP-A- 2000 273 126
- JP-A- 2003 514 078
- JP-A- 2005 008 870

## Description

### TECHNICAL FIELD

The present invention relates to a process for producing a modified polymer, a modified polymer obtained by the process, and a rubber composition containing the same. More particularly, the present invention relates to a process for producing a modified polymer that exhibits low heat build-up (low fuel consumption), an improved filler reinforcement capability, and excellent wear resistance, a modified polymer obtained by the process, and a rubber composition containing the same.

### BACKGROUND ART

In recent years, a reduction in fuel consumption of automobiles has been increasingly demanded in connection with a demand for energy conservation. In order to deal with such a demand, it is necessary to further reduce the rolling resistance of tires. The rolling resistance of tires may be reduced by optimizing the tire structure. At present, the rolling resistance of tires is most generally reduced by utilizing a rubber composition that exhibits low heat build-up.

In order to obtain a rubber composition that exhibits low heat build-up, a modified rubber used for a rubber composition that utilizes silica or carbon black as a filler has been extensively developed. In particular, it is effective to modify the polymerization active end of a conjugated diene polymer obtained by anionic polymerization using an organolithium compound with an alkoxysilane derivative having a functional group that interacts with a filler.

However, most of these technologies are applied to a polymer of which the polymer end exhibits living properties. Specifically, a sufficient modification effect is not obtained for a rubber composition that contains silica or carbon black. Moreover, since the main chain cannot be sufficiently branched using a related-art modification method, a cold flow occurs to a large extent. When partial coupling is used to deal with this problem, the modification effect inevitably decreases.

In order to solve the above-mentioned problems and improve the modification effect, a method that adds a condensation accelerator to the reaction system when modifying the polymerization active end of a conjugated diene polymer with an alkoxysilane compound has been proposed (see Patent Document 1). However, a further improvement in performance of a modified polymer has been desired.
Patent Document 1: WO03/048216A1

EP 1 462 459 A1 and WO 2006/101025 A1 disclose further processes for producing modified polymer.

### DISCLOSURE OF THE INVENTION

The present invention was conceived in view of the above-described situation. An object of the present invention is to provide a process for producing a modified polymer that exhibits low rolling resistance, excellent mechanical properties (e.g., tensile strength), high wet-skid resistance, and excellent wear resistance when vulcanized, a modified polymer obtained by the process, and a rubber composition containing the same.

According to the present invention, there is provided a process for producing a modified polymer according to claim 1, the process comprising: subjecting an alkali metal active end of a conjugated diene polymer to a modification reaction with an alkoxysilane compound, the conjugated diene polymer being produced by subjecting a diene monomer or a diene monomer and a monomer other than the diene monomer to anionic polymerization in a hydrocarbon solvent using an alkali metal initiator; and subjecting the resulting product to a condensation reaction in the presence of a condensation accelerator.

In the process according to the present invention, the condensation accelerator includes a compound of zirconium (Zr), bismuth (Bi), or aluminum (Al), and it is preferable that the compound included in the condensation accelerator be an alkoxide, a carboxylate, or an acetylacetonato complex salt of the element.

The alkoxysilane compound is at least one alkoxysilane compound selected from alkoxysilane compounds shown by the following general formula (II) and/or partial condensates thereof, 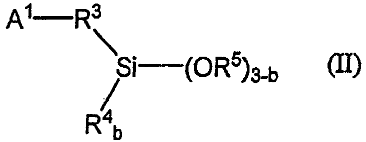 wherein A¹ represents a monovalent group having at least one functional group selected from an imine group, a cyano group,
a cyclic tertiary amine group, a non-cyclic tertiary amine group, a pyridine group, a silazane group, and a bisulfide group, R³ represents a single bond or a divalent hydrocarbon group, R⁴ and R⁵ individually represent a monovalent aliphatic hydrocarbon group having 1 to 20 carbon atoms or a monovalent aromatic hydrocarbon group having 6 to 18 carbon atoms, and b represents an integer from 0 to 2, provided that, when a plurality of OR⁵s are present, the plurality of OR⁵s may be the same or different, and an active proton is not included in the molecule.

It is preferable that the condensation accelerator include at least one compound selected from (a) a bismuth carboxylate, (b) a zirconium alkoxide, (c) a zirconium carboxylate, (d) an aluminum alkoxide, and (e) an aluminum carboxylate.

It is preferable that the conjugated diene polymer having the active end used in the present invention be synthesized by anionic polymerization, and the monomer other than the diene monomer be an aromatic vinyl compound. The diene monomer may be at least one conjugated diene compound selected from 1,3-butadiene, isoprene, and 2,3-dimethyl-1,3-butadiene. The aromatic vinyl compound is preferably styrene.

According to the present invention, a modified polymer obtained by the above process and a rubber composition comprising the modified polymer are also provided. It is preferable that the rubber composition comprise 100 parts by mass of a rubber component and 20 to 120 parts by mass of silica and/or carbon black, the rubber component including the modified polymer in an amount of 20 mass% or more.

In the rubber composition, it is preferable that the rubber component include 20 to 100 mass% of the modified polymer and 0 to 80 mass% of at least one rubber selected from the group consisting of a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, and a halogenated butyl rubber (modified polymer + rubber other than the modified polymer = 100 mass%).

According to the present invention, a rubber composition that exhibits low rolling resistance, excellent mechanical properties (e.g., tensile strength), excellent wet-skid resistance, and excellent wear resistance can be provided by adding silica and/or carbon black to the modified conjugated diene polymer obtained according to the present invention, and vulcanizing the resulting product to produce a vulcanized rubber.

### BEST MODE FOR CARRYING OUT THE INVENTION

Embodiments of the present invention are described in detail below. Note that the present invention is not limited to the following embodiments.

A process for producing a modified polymer according to the present invention includes subjecting a diene monomer or a diene monomer and a monomer other than the diene monomer to anionic polymerization in a hydrocarbon solvent using an alkali metal initiator to produce a conjugated diene polymer that normally has a vinyl content of 10% or more and contains an alkali metal active end, subjecting the alkali metal active end of the conjugated diene polymer to a modification reaction with an alkoxysilane compound, and subjecting the resulting product to a condensation reaction in the presence of a given condensation accelerator.

The condensation accelerator is normally added after subjecting the active end of the conjugated diene polymer to a modification reaction with the alkoxysilane compound, but before subjecting the resulting product to a condensation reaction. Note that the condensation accelerator may be added before adding the alkoxysilane compound (before the modification reaction). In this case, the active end of the conjugated diene polymer is then subjected to a modification reaction with the alkoxysilane compound, followed by a condensation reaction.

The conjugated diene polymer having an alkali metal active end used in the process according to the present invention is produced by polymerizing a diene monomer or copolymerizing a diene monomer and a monomer other than the diene monomer. The conjugated diene polymer may be produced by an arbitrary method. A solution polymerization method, a gas-phase polymerization method, or a bulk polymerization method may be used. Among these, a solution polymerization method is preferable. The polymerization reaction may be carried out either batchwise or continuously.

The metal in the active site of the molecule of the conjugated diene polymer is preferably a metal selected from alkali metals and alkaline earth metals, and is particularly preferably lithium.

When using a solution polymerization method, the desired polymer may be produced by subjecting a conjugated diene compound or a conjugated diene compound and an aromatic vinyl compound to anionic polymerization using a lithium compound as an initiator, for example.

It is also effective to use a halogen-containing monomer in combination with a conjugated diene compound, and activate the halogen atom in the polymer using an organometallic compound. For example, it is effective to subject a bromine atom of a copolymer that includes an isobutylene unit, a p-methylstyrene unit, and a p-bromomethylstyrene unit to lithiation to form an active site.

Examples of the conjugated diene compound include 1,3-butadiene, isoprene, 1,3-pentadiene, 2,3-dimethylbutadiene, 2-phenyl-1,3-butadiene, 1,3-hexadiene, and the like. These compounds may be used either individually or in combination. Among these compounds, 1,3-butadiene and isoprene are particularly preferable.

Examples of the aromatic vinyl compound that is copolymerized with the conjugated diene compound include styrene, α-methylstyrene, 1-vinylnaphthalene, 3-vinyltoluene, ethylvinylbenzene, divinylbenzene, 4-cyclohexylstyrene, 2,4,6-trimethylstyrene, and the like. These compounds may be used either individually or in combination. Among these compounds, styrene is particularly preferable.

When copolymerizing the conjugated diene compound and the aromatic vinyl compound as monomers, it is particularly preferable to use 1,3-butadiene and styrene from the viewpoint of utility (e.g., availability), living anionic polymerization properties, and the like.

When using a solution polymerization method, the monomer concentration in a solvent is preferably 5 to 50 mass%, and more preferably 10 to 30 mass%. When copolymerizing the conjugated diene compound and the aromatic vinyl compound, the content of the aromatic vinyl compound in the monomer mixture is preferably 3 to 50 mass%, and more preferably 6 to 45 mass%.

The lithium compound used as the initiator is not particularly limited, but is preferably an organolithium compound or a lithium amide compound. When using the organolithium compound, a conjugated diene polymer of which the polymerization initiation end has a hydrocarbon group and the other end serves as a polymerization active site is obtained. When using the lithium amide compound, a conjugated diene polymer of which the polymerization initiation end has a nitrogen-containing group and the other end serves as a polymerization active site is obtained.

As the organolithium compound, an organolithium compound that includes a hydrocarbon group having 1 to 20 carbon atoms is preferable. Examples of such an organolithium compound include methyllithium, ethyllithium, n-propyllithium, isopropyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, a reaction product of diisopropenylbenzene and butyllithium, and the like. Among these, n-butyllithium and sec-butyllithium are preferable.

Examples of the lithium amide compound include lithium hexamethylene imide, lithium pyrrolidide, lithium piperidide, lithium heptamethylene imide, lithium dodecamethylene imide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium dodecylamide, lithium-N-methylpiperazide, lithium ethylpropylamide, lithium ethylbutyramide, lithium ethylbenzylamide, lithium methylphenethylamide, and the like. Among these, cyclic lithium amides such as lithium hexamethylene imide, lithium pyrrolidide, lithium piperidide, lithium heptamethylene imide, and lithium dodecamethylene imide are preferable from the viewpoint of interaction with carbon black and polymerization initiation capability. Lithium hexamethylene imide, lithium pyrrolidide, and lithium piperidide are particularly preferable as the lithium amide compound.

These lithium amide compounds are generally prepared from a secondary amine and a lithium compound and used for polymerization. Note that these lithium amide compounds may be prepared in the polymerization system (*in situ*)*.* The initiator is used in an amount of 0.2 to 20 mmol per 100 g of the monomers.

The method of producing the conjugated diene polymer by anionic polymerization using the above-mentioned lithium compound as the initiator is not particularly limited. A known method may be used.

Specifically, the desired conjugated diene polymer is obtained by subjecting the conjugated diene compound or the conjugated diene compound and the aromatic vinyl compound to anionic polymerization in an inert organic solvent (e.g., a hydrocarbon solvent such as an aliphatic, alicyclic, or aromatic hydrocarbon compound) using the lithium compound as the initiator optionally in the presence of a randomizer.

As the hydrocarbon solvent, a hydrocarbon solvent having 3 to 8 carbon atoms is preferable. Examples of such a hydrocarbon solvent include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, and the like. These hydrocarbon solvents may be used either individually or in combination.

The randomizer that is optionally used is a compound having a function of controlling the microstructure of the conjugated diene polymer (e.g., increasing the 1,2-bond content of a butadiene portion of a butadiene-styrene copolymer or increasing the 3,4-bond content of an isoprene polymer), or controlling the distribution of monomer units in a conjugated diene compound-aromatic vinyl compound copolymer (e.g., randomizing butadiene units and styrene units in a butadiene-styrene copolymer). The randomizer is not particularly limited. An arbitrary compound generally used as the randomizer may be appropriately used. Specific examples of such a compound include ethers and tertiary amines such as dimethoxybenzene, tetrahydrofuran, dimethoxyethane, diethylene glycol dibutyl ether, diethylene glycol dimethyl ether, bis(tetrahydrofuryl)propane, triethylamine, pyridine, N-methylmorpholine, N,N,N',N'-tetramethylethylenediamine, and 1,2-dipiperidinoethane, and the like. These randomizers may be used either individually or in combination.

When it is desired to improve the reactivity of the initiator used in the present invention, or randomly arrange the aromatic vinyl compounds introduced into the polymer, or form a single chain of the aromatic vinyl compound, a potassium compound may be added in combination with the initiator. Examples of the potassium compound which may be added in combination with the initiator include potassium alkoxides and potassium phenoxides such as potassium isopropoxide, potassium t-butoxide, potassium t-amyloxide, potassium n-heptaoxide, potassium benzyl oxide, and potassium phenoxide; potassium salts of isovalerianic acid, caprylic acid, lauric acid, palmitic acid, stearic acid, oleic acid, linolenic acid, benzoic acid, phthalic acid, 2-ethylhexanoic acid, and the like; potassium salts of an organic sulfonic acid such as dodecylbenzenesulfonic acid, tetradecylbenzenesulfonic acid, hexadecylbenzenesulfonic acid, and octadecylbenzenesulfonic acid; potassium salts of an organic phosphorous acid partial ester such as diethyl phosphite, diisopropyl phosphite, diphenyl phosphite, dibutyl phosphite, and dilauryl phosphite; and the like.

These potassium compounds may be added in an amount of 0.005 to 0.5 mol per gram atomic equivalent of the alkali metal used in the initiator. If the amount of the potassium compound is less than 0.005 mol, the effects of adding the potassium compound (i.e., an improvement in the reactivity of the initiator, random arrangement of the aromatic vinyl compounds, or formation of a single chain of the aromatic vinyl compound) may not be obtained. If the amount of the potassium compound exceeds 0.5 mol, the polymerization activity decreases so that the productivity significantly decreases. Moreover, the modification efficiency when modifying the polymer end with the functional group decreases.

The polymerization temperature is preferably -20 to 150°C, and more preferably 0 to 120°C. The polymerization reaction may be carried out under pressure. It is desirable to apply a pressure sufficient to substantially maintain the monomers in a liquid phase. Specifically, a high pressure may optionally be used depending on each polymerization target substance, the polymerization medium, and the polymerization temperature. A high pressure may be applied by an appropriate method such as pressurizing the reactor using a gas that is inert to the polymerization reaction.

It is desirable that all of the raw materials involved in polymerization such as the initiator, the solvent, and the monomer be free from a reaction-inhibiting substance such as water, oxygen, carbon dioxide, and a protonic compound.

When obtaining a polymer as an elastomer, it is preferable that the resulting polymer or copolymer have a glass transition temperature (Tg) determined by differential thermal analysis of -90 to 0°C. It is difficult to obtain a polymer having a glass transition temperature of less than -90°C. If the polymer has a glass transition temperature of more than 0°C, the viscosity of the polymer increases to a large extent at room temperature so that handling may become difficult.

In the present invention, the active end of the conjugated diene polymer having a vinyl content of 10% or more, for example, is subjected to a modification reaction with the alkoxysilane compound. The type of alkoxysilane compound used for the modification reaction (hereinafter may be referred to as "modifier") is not particularly limited. According to the present invention an alkoxysilane compound is used selected from alkoxysilane compounds shown by the following general formula (II) and/or partial condensates thereof, 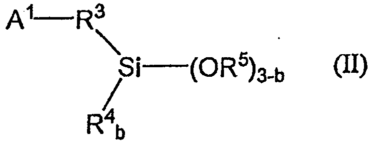 wherein A¹ represents a monovalent group having at least one functional group selected from an imine group, a cyano group,
a cyclic tertiary amine group, a non-cyclic tertiary amine group, a pyridine group, a silazane group, and a bisulfide group, R³ represents a single bond or a divalent hydrocarbon group, R⁴ and R⁵ individually represent a monovalent aliphatic hydrocarbon group having 1 to 20 carbon atoms or a monovalent aromatic hydrocarbon group having 6 to 18 carbon atoms, and b represents an integer from 0 to 2, provided that, when a plurality of OR⁵s are present, the plurality of OR⁵s may be the same or different, and an active proton is not included in the molecule.

The term "partial condensate" used herein refers to a compound in which some of the SiOR groups of the alkoxysilane compounds form an SiOSi bond through condensation.

It is preferable that at least 20% of the polymer chain of the polymer used for the modification reaction exhibit living properties.

Note that the alkoxysilane compounds shown by the general formula (II) and by the following general formula (I) may be used in combination when modifying the active site of the polymer.

R¹ₐ-Si-(OR²)₄₋ₐ (I)

wherein R¹ and R² individually represent a monovalent aliphatic hydrocarbon group having 1 to 20 carbon atoms or a monovalent aromatic hydrocarbon group having 6 to 18 carbon atoms, and a represents an integer from 0 to 2, provided that, when a plurality of OR²s are present, the plurality of OR²s may be the same or different, and an active proton is not included in the molecule.

Specific examples of the alkoxysilane compound shown by the general formula (I) that is reacted with the active site of the polymer include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, epoxybutyltriethoxysilane, phenyltrimethoxysilane, phenyltriethoxysilane, dimethyltridimethoxysilane, methylphenyldimethoxysilane, dimethyldiethoxysilane, vinyltrimetoxysilane, vinyltriethoxysilane, divinyldiethoxysilane, and the like. Among these, tetraethoxysilane, methyltriethoxysilane, and dimethyldiethoxysilane are preferable. These alkoxysilane compounds may be used either individually or in combination.

Specific examples of the alkoxysilane compound shown by the general formula (II) that is reacted with the active site of the polymer are as follows.
epoxy group-containing alkoxysilane compounds include 2-glycidoxyethyltrimethoxysilane, 2-glycidoxyethyltriethoxysilane,

Examples of imine group-containing alkoxysilane compounds include N-(1,3-dimethylbutylidene)-3-(triethoxysilyl)-1-propanamine, N-(1,3-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, N-(cyclohexylidene)-3-(triethoxysilyl)-1-propanamine, trimethoxysilyl compounds, methyldiethoxysilyl compounds, and ethyldimethoxysilyl compounds corresponding to these triethoxysilyl compounds, and the like. Among these, N-(1,3-dimethylbutylidene)-3-(triethoxysilyl)-1-propanamine and N-(1-methylpropylidene)-3-(triethoxysilyl)-1-propanamine are preferable. Examples of imine(amidine) group-containing compounds include 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, 3-(1-hexamethyleneimino)propyl(triethoxy)silane, (1-hexamethyleneimino)methyl(trimethoxy)silane, N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole, and the like. Among these, N-(3-triethoxysilylpropyl)-4,5-dihydroimidazole and N-(3-isopropoxysilylpropyl)-4,5-dihydroimidazole are preferable.

Examples of cyano group-containing alkoxysilane compounds include 2-cyanoethylpropyltriethoxysilane and the like.

Examples of cyclic tertiary amine-containing alkoxysilane compounds include 3-(1-hexamethyleneimino)propyltriethoxysilane, 3-(1-hexamethyleneimino)propyltrimethoxysilane, (1-hexamethyleneimino)methyltriethoxysilane, (1-hexamethyleneimino)methyltrimethoxysilane, 2-(1-hexamethyleneimino)ethyltriethoxysilane, 3-(1-hexamethyleneimino)ethyltrimethoxysilane, 3-(1-pyrrolidinyl)propyltriethoxysilane, 3-(1-pyrrolidinyl)propyltrimethoxysilane, 3-(1-heptamethyleneimino)propyltriethoxysilane, 3-(1-dodecamethyleneimino)propyltriethoxysilane, 3-(1-hexamethyleneimino)propyldiethoxymethylsilane, 3-(1-hexamethyleneimino)propyldiethoxyethylsilane, 3-[10-(triethoxysilyl)decyl]4-oxazoline, and the like. Among these, 3-(1-hexamethyleneimino)propyltriethoxysilane and (1-hexamethyleneimino)methyltriethoxysilane are preferable.

Examples of non-cyclic tertiary amine-containing alkoxysilane compounds include 3-dimethylaminopropyltriethoxysilane, 3-dimethylaminopropyltrimethoxysilane, 3-diethylaminopropyltriethoxysilane, 3-dimethylaminopropyltrimethoxysilane, 2-dimethylaminoethyltriethoxysilane, 2-dimethylaminoethyltrimethoxysilane, 3-dimethylaminopropyldiethoxymethylsilane, 3-dibutylaminopropyltriethoxysilane, and the like. Among these, 3-dimethylaminopropyltriethoxysilane and 3-diethylaminopropyltriethoxysilane are preferable.

Examples of pyridine-containing alkoxysilane compounds include 2-trimethoxysilylethylpyridine and the like.

Examples of silazane-containing alkoxysilane compounds include N,N-bis(trimethylsilyl)aminopropylmethyldimethoxysilane, 1-trimethylsilyl-2,2-dimethoxy-1-aza-silacyclopentane, N,N-bis(trimethylsilyl)aminopropyltrimethoxysilane, N,N-bis(trimethylsilyl)aminopropyltriethoxysilane N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane, and the like. Among these, N,N-bis(trimethylsilyl)aminopropyltriethoxysilane, N,N-bis(trimethylsilyl)aminopropylmethyldiethoxysilane, and 1-trimethylsilyl-2,2-dimethoxy-1-aza-silacyclopentane are preferable.

Examples of sulfide containing alkoxysilane compounds include bis(3-triethoxysilylpropyl)tetrasulfide, bis(3-triethoxysilylpropyl)disulfide, and the like.

These alkoxysilane compounds may be used either individually or in combination. A partial condensate of the above-mentioned alkoxysilane compound may also be used.

Note that the alkoxysilane compounds shown by the general formulas (I) and (II) may be used in combination when modifying the active site of the polymer.

The alkoxysilane compound as the modifier is preferably used in an amount of 0.1 molar equivalents or more, and more preferably 0.3 molar equivalents or more with respect to the active site of the polymer obtained by anionic polymerization. If the molar equivalent of the alkoxysilane compound is less than 0.1, the modification reaction may not sufficiently proceed so that the dispersibility of the filler may not be sufficiently improved. As a result, the mechanical characteristics, wear resistance, and low heat build-up after vulcanization may deteriorate.

The modifier may be added by an arbitrary method. For example, the modifier may be added at one time, stepwise, or successively. However, it is preferable to add the modifier at one time.

In the present invention, the modification reaction is preferably carried out by means of a solution reaction (the solution may contain unreacted monomers used for polymerization).

The modification reaction may be carried out by an arbitrary method. For example, the modification reaction may be carried out using a batch-type reactor, or may be carried continuously using a multi-stage continuous reactor, an inline mixer, or the like. It is important to carry out the modification reaction after completion of the polymerization reaction, but before carrying out the operations necessary for solvent removal, water treatment, heat treatment, polymer isolation, and the like.

The modification reaction temperature may be the same as the polymerization temperature employed when producing the conjugated diene polymer. Specifically, the modification reaction temperature is preferably 0 to 120°C. The modification reaction temperature is more preferably 20 to 100°C. If the modification reaction temperature is less than 0°C, the viscosity of the polymer may increase. If the modification reaction temperature is more than 120°C, the polymerization active end may be easily inactivated.

The modification reaction is normally carried out for one minute to five hours, and preferably two minutes to one hour.

In the present invention, an aging preventive or a reaction terminator may optionally be added during the modification reaction after introducing the alkoxysilane compound residue into the active end of the polymer.

The condensation accelerator used in the present invention includes a compound of at least one element among zirconium (Zr), bismuth (Bi), or aluminum (Al). It is preferable that the compound be an alkoxide, a carboxylate, or an acetylacetonato complex salt of the above-mentioned element. In particular, the condensation accelerator preferably includes at least one compound selected from the following compounds (a) to (e).
(a) Bismuth carboxylate
(b) Zirconium alkoxide
(c) Zirconium carboxylate
(d) Aluminum alkoxide
(e) Aluminum carboxylate

Specific examples of the condensation accelerator include bismuth tris(2-ethylhexanoate), bismuth tris(laurate), bismuth tris(naphthate), bismuth tris(stearate), bismuth tris(oleate), bismuth tris(linolate), tetraethoxyzirconium, tetra-n-propoxyzirconium, tetra-i-propoxyzirconium, tetra-n-butoxyzirconium, tetra-sec-butoxyzirconium, tetra-tert-butoxyzirconium, tetra(2-ethylhexyl)zirconium, zirconium tributoxystearate, zirconium tributoxyacetylacetonate, zirconium dibutoxybis(acetylacetonate), zirconium tributoxyethyl acetoacetate, zirconium butoxyacetylacetonate bis(ethylacetoacetate), zirconium tetrakis(acetylacetonate), zirconium diacetylacetonate bis(ethylacetoacetate), zirconium bis(2-ethylhexanoate) oxide, zirconium bis(laurate) oxide, zirconium bis(naphthate) oxide, zirconium bis(stearate) oxide, zirconium bis(oleate) oxide, zirconium bis(linolate) oxide, zirconium tetrakis(2-ethylhexanoate), zirconium tetrakis(laurate), zirconium tetrakis(naphthate), zirconium tetrakis(stearate), zirconium tetrakis(oleate), zirconium tetrakis(linolate), triethoxyaluminum, tri-n-propoxyaluminum, tri-i-propoxyaluminum, tri-n-butoxyaluminum, tri-sec-butoxyaluminum, tri-tert-butoxyaluminum, tri(2-ethylhexyl)aluminum, aluminum dibutoxystearate, aluminum dibutoxyacetylacetonate, aluminum butoxybis(acetylacetonate), aluminum dibutoxyethyl acetoacetate, aluminum tris(acetylacetonate), aluminum tris(ethylacetoacetate), aluminum tris(2-ethylhexanoate), aluminum tris(laurate), aluminum tris(naphthate), aluminum tris(stearate), aluminum tris(oleate), aluminum tris(linolate), and the like. Among these, bismuth tris(2-ethylhexanoate), tetra-n-propoxyzirconium, tetra-n-butoxyzirconium, zirconium bis(2-ethylhexanoate) oxide, zirconium bis(oleate) oxide, tri-i-propoxyaluminum, tri-sec-butoxyaluminum, aluminum tris(stearate), zirconium tetrakis(acetylacetonate), and aluminum tris(ethylacetoacetate) are preferable.

The condensation accelerator is preferably used so that the molar ratio of the above-mentioned compound to the total amount of alkoxysilyl groups present in the reaction system is 0.1 to 10, and particularly preferably 0.5 to 5. If the molar ratio is less than 0.1, a condensation reaction may not sufficiently proceed. If the molar ratio is more than 10, the effect of the condensation accelerator is saturated (i.e., uneconomical).

In the present invention, the condensation reaction is preferably carried out in the presence of water. In this case, water may be used in the form of a solution (e.g., alcohol aqueous solution), a micell dispersed in a hydrocarbon solvent, or the like. The modified polymer or its solution may be caused to directly come in contact with water. Note that water contained in a compound that may release water in the reaction system (e.g., water adsorbed on a solid surface or water of hydration) may also be effectively used. Therefore, a compound that easily releases water (e.g., a solid that adsorbs water or a hydrate) may be used in combination with the organometallic compound.

The condensation reaction is preferably carried out at 20 to 1180°C, more preferably 30 to 160°C, and particularly preferably 50 to 150°C.

If the condensation reaction is carried out at a temperature of less than 20°C, since the condensation reaction proceeds slowly and may not be completed, the properties of the modified conjugated diene polymer may change with time. If the condensation reaction is carried out at a temperature of more than 180°C, the polymer may undergo an aging reaction so that the properties of the polymer may deteriorate.

The condensation reaction is normally carried out for 5 minutes to 10 hours, and preferably about 15 minutes to 5 hours. If the reaction time is less than 5 minutes, the condensation reaction may not be completed. If the reaction time exceeds 10 hours, the condensation reaction is saturated.

The pressure inside the reaction system during the condensation reaction is normally 0.01 to 20 MPa, and preferably 0.05 to 10 MPa.

The condensation reaction may be carried out by an arbitrary method. The condensation reaction may be carried out using a batch-type reactor, or may be carried out continuously using a multi-stage continuous reactor or the like. The condensation reaction may be carried out while removing the solvent.

After completion of condensation, the resulting product is post-treated to obtain the desired modified conjugated diene polymer.

The Mooney viscosity (ML₁₊₄, 100°C) of the modified conjugated diene polymer according to the present invention is preferably 10 to 150, and more preferably 15 to 130. If the Mooney viscosity is less than 10, the rubber properties (e.g., fracture properties) tend to decrease. If the Mooney viscosity is more than 150, since the processability may deteriorate, it may be difficult to mix the polymer with compounding ingredients.

The rubber composition according to the present invention preferably includes the modified conjugated diene polymer (rubber component) in an amount of 20 mass% or more. If the amount of the modified conjugated diene polymer is less than 20 mass%, a rubber composition having the desired properties may not be obtained so that the object of the present invention may not be achieved. The content of the modified conjugated diene polymer in the rubber component is more preferably 30 mass% or more, and particularly preferably 40 mass% or more.

The modified conjugated diene polymer may be used either individually or in combination. Examples of rubber components used in combination with the modified conjugated diene polymer include a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, a halogenated butyl rubber, a mixture of these, and the like. The modified conjugated diene polymer may partially have a branched structure that is introduced using a polyfunctional modifier such as tin tetrachloride or silicon tetrachloride.

It is preferable that the rubber composition according to the present invention include silica and/or carbon black as a filler.

The silica used as the filler is not particularly limited. Examples of the silica include wet silica (hydrous silicic acid), dry silica (silicic anhydride), calcium silicate, aluminum silicate, and the like. Among these, it is preferable to use the wet silica that improves the fracture resistance and ensures the wet grip performance and low rolling resistance.

The carbon black used as the filler is not particularly limited. For example, SRF, GPF, FEF, HAF, ISAF, SAF, or the like is used. It is preferable to use carbon black having an iodine adsorption (IA) of 60 mg/g or more and a dibutyl phthalate (DBP) absorption of 80 ml/100 g or more. The grip performance and the fracture resistance are improved to a large extent using the carbon black. It is particularly preferable to use HAF, ISAF, or SAF that exhibits excellent wear resistance.

The silica and/or the carbon black may be used either individually or in combination.

The silica and/or the carbon black is preferably used in an amount of 20 to 120 parts by mass based on 100 parts by mass of the rubber component. The amount of the silica and/or the carbon black is more preferably 25 to 100 parts by mass from the viewpoint of the reinforcement effect and an improvement in properties. If the amount of the silica and/or the carbon black is too small, the fracture resistance and the like are not sufficiently improved. If the amount of the silica and/or the carbon black is too large, the rubber composition may exhibit poor processability.

The rubber composition according to the present invention includes the modified conjugated diene polymer obtained by the above-mentioned method. The rubber composition preferably includes a rubber component that contains the modified conjugated diene polymer in an amount of 20 mass% or more, and the silica and/or the carbon black in an amount of 20 to 120 parts by mass, and more preferably 25 to 120 parts by mass based on 100 parts by mass of the rubber component.

When using the silica as a reinforcement filler, a silane coupling agent may be added to the rubber composition according to the present invention in order to improve the reinforcement effect. Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, and the like. Among these, bis(3-triethoxysilylpropyl) polysulfide and 3-trimethoxysilylpropylbenzothiazyl tetrasulfide are preferable from the viewpoint of the reinforcement improvement effect and the like.

These silane coupling agents may be used either individually or in combination.

In the rubber composition according to the present invention, since the modified polymer that contains a functional group that has high affinity with silica and is introduced into the molecular end is used as the rubber component, the amount of the silane coupling agent added to the rubber composition can be reduced. The silane coupling agent is normally used in an amount of 1 to 20 mass% with respect to silica, although the amount differs depending on the type of silane coupling agent and the like. If the amount of the silane coupling agent is too small, the silane coupling agent may not exhibit a sufficient effect. If the amount of the silane coupling agent is too large, the rubber component may gel. The silane coupling agent is preferably used in an amount of 3 to 15 mass% from the viewpoint of the coupling effect, the gelation prevention effect, and the like.

Chemicals normally used in the rubber industry (e.g., vulcanizing agent, vulcanization accelerator, process oil, aging preventive, anti-scorching agent, zinc oxide, and stearic acid) may optionally be added to the rubber composition according to the present invention insofar as the object of the present invention is not impaired.

The rubber composition according to the present invention is obtained by mixing the above-described components using an open mixer (e.g., roll) or a closed mixer (e.g., Banbury mixer). After molding the rubber composition, the molded product is vulcanized. The resulting product can be used as various rubber products. The rubber composition according to the present invention may be suitably used for tire applications (e.g., tire tread, under-tread, carcass, side wall, and bead) and other industrial products (e.g., rubber vibration insulator, fender, belt, and hose). The rubber composition according to the present invention is particularly suitably used as a tire tread rubber.

### EXAMPLES

The present invention is further described below by way of examples. Note that the present invention is not limited to the following examples. In the examples, "part" and "%" respectively indicate "part by mass" and "mass%" unless otherwise indicated.

In the examples, each item was measured by the following method.

### (1) Vinyl content of conjugated diolefin

The vinyl content of the conjugated diolefin was measured by 270 MHz ¹H-NMR.

### (2) Styrene content

The styrene content was measured by 270 MHz ¹H-NMR.

### (3) Glass transition temperature (°C)

The glass transition temperature (°C) was measured in accordance with ASTM D3418.

### (4) Mooney viscosity (ML₁₊₄, 100°C)

The Mooney viscosity (ML₁₊₄, 100°C) was measured in accordance with JIS K 6300 using an L rotor (preheating time: 1 min, rotor operation time: 4 min, temperature: 100°C).

### (5) Evaluation of properties of vulcanized rubber

A copolymer and components shown in Table 5 were kneaded using a Labo Plastomill (250 cc), and subjected to vulcanization at 145°C for a given period of time to obtain a vulcanized rubber. The following properties (i) to (iii) of the vulcanized rubber were measured.
(i) Tensile strength (300% modulus): The tensile strength was measured in accordance with JIS K 6301. The tensile strength was indicated by a wet-skid resistance index. A larger wet-skid resistance index indicates a higher tensile strength.
(ii) tanδ (50°C) and tanδ (0°C): The tanδ (50°C) was measured using a dynamic spectrometer manufactured by Rheometrics Scientific Inc. (U.S.A.) at a dynamic tensile strain of 1%, a frequency of 10 Hz, and a temperature of 50°C. The tanδ (50°C) was indicated by an index. A larger index indicates a smaller rolling resistance. The tanδ (0°C) was measured using the dynamic spectrometer at a dynamic tensile strain of 0.1%, a frequency of 10 Hz, and a temperature of 0°C. The tanδ (0°C) was indicated by an index. A larger index indicates a higher wet-skid resistance.
(iii) Wear resistance (Lambourn wear index): The wear resistance was measured at room temperature using a Lambourn wear tester, and indicated by the amount of wear at a slip rate of 25%. A larger index indicates a higher wear resistance.

### Example 1 (synthesis of copolymer A) - Reference Example

A 5 1 autoclave reactor of which the internal atmosphere was replaced by nitrogen was charged with 2750 g of cyclohexane, 41.3 g of tetrahydrofuran, 125 g of styrene, and 375 g of 1,3-butadiene. The temperature of the mixture inside the reactor was adjusted to 10°C. After the addition of 215 mg of n-butyllithium, the monomers were polymerized. The polymerization reaction was carried out under thermally-insulated conditions. The maximum temperature reached 85°C.

10 g of butadiene was added when the polymerization conversion rate reached 99%. The monomers were then polymerized for five minutes. A small amount of the polymer solution in the reactor was sampled into 30 g of a cyclohexane solution to which 1 g of methanol was added. After the addition of 600 mg of methyltriethoxysilane (modifier), the mixture was subjected to a modification reaction for 15 minutes. After the addition of 3.97 g of zirconium bis(2-ethylhexanoate) oxide (condensation accelerator), the mixture was stirred for 15 minutes. After completion of the reaction. 2,6-di-tert-butyl-p-cresol was added to the polymer solution. After removing the solvent by steam stripping, the rubber was dried using a heat roll of which the temperature was adjusted to 110°C to obtain a crude rubber copolymer. Tables 1, 2, 3, and 4 show the composition and the properties of the resulting copolymer.

### Example 2 (synthesis of copolymer B) - Reference Example

A copolymer B was obtained in the same manner as in Example 1, except that 6.45 g of bismuth tris(2-ethylhexanoate) was used instead of 3.97 g of zirconium bis(2-ethylhexanoate) oxide. Tables 1 and 3 show the composition and the properties of the copolymer B.

### Example 3 (synthesis of copolymer C) - Reference Example

A copolymer C was obtained in the same manner as in Example 1, except that 2.49 g of tri-sec-butoxyaluminum was used instead of 3.97 g of zirconium bis(2-ethylhexanoate) oxide. Tables 1 and 3 show the composition and the properties of the copolymer C.

### Comparative Examples 1 to 3 (synthesis of copolymers D to F)

Copolymers D to F were obtained in the same manner as in Example 1, except that the additive was changed as shown in Table 1 (no additive was used in Comparative Example 1). Tables 1 and 3 show the compositions and the properties of the copolymers D to F.

### Comparative Example 4 (synthesis of copolymer G)

A copolymer G was obtained in the same manner as in Example 1, except that 803 mg of 3-glycidoxypropyltrimethoxysilane was used as the modifier. Tables 1 and 3 show the composition and the properties of the copolymer G

### Comparative Example 5 (synthesis of copolymer H)

A copolymer H was obtained in the same manner as in Comparative Example 4, except that 6.45 g of bismuth tris(2-ethylhexanoate) was used instead of 3.97 g of zirconium bis(2-ethylhexanoate) oxide. Tables 1 and 3 show the composition and the properties of the copolymer H.

### Comparative Example 6 (synthesis of copolymer I)

Acopolymef I was obtained in the same manner as in Example 4, except that zirconium bis(2-ethylhexanoate) oxide was not added. Tables 1 and 3 show the composition and the properties of the copolymer I.

### Example 4 (synthesis of copolymer M)

A copolymer M was obtained in the same manner as in Example 1, except that 1231 mg of N,N-bis(trimethylsilyl)aminopropyltriethoxysilane was used as the modifier. Tables 2 and 4 show the composition and the properties of the copolymer M.

### Example 5 (synthesis of copolymer N)

A copolymer N was obtained in the same manner as in Example 4, except that 6.45 g of bismuth tris(2-ethylhexanoate) was used instead of 3.97 g of zirconium bis(2-ethylhexanoate) oxide. Tables 2 and 4 show the composition and the properties of the copolymer N.

### Example 6 (synthesis of copolymer O)

A copolymer O was obtained in the same manner as in Example 4, except that 2.49 g of tri-sec-butoxyaluminum was used instead of 3.97 g of zirconium bis(2-ethylhexanoate) oxide. Tables 2 and 4 show the composition and the properties of the copolymer O.

### Comparative Examples 7 to 9 (synthesis of copolymers P to R)

Copolymers P to R were obtained in the same manner as in Example 4, except that the additive was changed as shown in Table 2 (no additive was used in Comparative Example 7). Tables 2 and 4 show the compositions and the properties of the copolymers P to R

### Example 7 (synthesis of copolymer S)

A copolymer S was obtained in the same manner as in Example 1, except that 1019 mg of N-(1,3-dimethylbutylidene)-3-(triethoxysilyl)-2-propanamine was used as the modifier. Tables 2 and 4 show the composition and the properties of the copolymer S.

### Example 8 (synthesis of copolymer T)

A copolymer T was obtained in the same manner as in Example 7, except that 6.45 g of bismuth tris(2-ethylhexanoate) was used instead of 3.97 g of zirconium bis(2-ethylhexanoate) oxide. Tables 2 and 4 show the composition and the properties of the copolymer T.

### Comparative Example 10 (synthesis of copolymer U)

A copolymer U was obtained in the same manner as in Example 7, except that zirconium bis(2-ethylhexanoate) oxide was not added. Tables 2 and 4 show the composition and the properties of the copolymer U.

### Examples 9 to 16 and Comparative Examples 11 to 20

Compositions containing silica and carbon black were prepared according to Table 5 using the polymers A to I of Examples 1 to 3 and Comparative Examples 1 to 6. In Table 7, a polymer V (^{*1}) used in Comparative Example 21 is a commercially available SBR (JSR SL563) manufactured by JSR Corporation.

Each unvulcanized rubber composition was vulcanized. The properties of the resulting vulcanized rubber were evaluated. The results are shown in Tables 6 and 7. Each value shown in Tables 6 and 7 is a relative value with respect to the value (100) of Comparative Example 21.

As is clear from the results of Examples 9 to 16 and Comparative Examples 11 to 20, an increase in tensile strength, a decrease in rolling resistance, and a remarkable increase in wet-skid resistance and wear resistance were achieved by adding zirconium bis(2-ethylhexanoate) oxide, bismuth 2-ethylhexanoate, or tri-sec-butoxyaluminum as the condensation accelerator.

**TABLE 1**

| | | Refererence Example 1 | Reference Example 2 | Reference example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Copolymer | | A | B | C | D | E | F | G | H | I |
| Component | | | | | | | | | | |
| Solvent cyclohexane | (g) | 2750 | 2750 | 2750 | 2750 | 2750 | 2750 | 2750 | 2750 | 2750 |
| Vinyl content adjustement agent | | | | | | | | | | |
| Tetrahydrofuran | (g) | 41.3 | 413 | 41.3 | 41.3 | 41.3 | 41.3 | 41.3 | 41.3 | 19.3 |
| Monomer | | | | | | | | | | |
| Stytrene | (g) | 125 | 125 | 125 | 125 | 125 | 125 | 125 | 125 | 180 |
| Butadiene | (g) | 375 | 375 | 375 | 375 | 375 | 375 | 375 | 375 | 320 |
| Initiator | | | | | | | | | | |
| n-Butyllithium | (mg) | 215 | 215 | 215 | 215 | 215 | 215 | 215 | 215 | 215 |
| Modifier | | | | | | | | | | |
| MTES*¹ | (mg) | 600 | 600 | 600 | 600 | 600 | 600 | | | |
| GPMOS*² | (mg) | | | | | | | 803 | 803 | 803 |
| N-Si-1*³ | (mg) | | | | | | | | | |
| N-Si-2*⁴ | (mg) | | | | | | | | | |
| N-Si-3*⁵ | (mg) | | | | | | | | | |
| Additive | | | | | | | | | | |
| Zirconium bis(2-ethylhexane)oxide | (g) | 3.97 | | | | | | 3.97 | | |
| Bismuth tris(2-ethylhexanoate) | (g) | | 6.45 | | | | | | 6.45 | |
| Tri-sec-butoxyaluminum | (g) | | | 2.49 | | | | | | |
| Tin 2-ethylhexanoate | (g) | | | | | 4.09 | | | | |
| Tetrabutoxytitanum | (g) | | | | | | 3.44 | | | |

| | | | | | | | | | | |
|---|---|---|---|---|---|---|---|---|---|---|
| *1: Methyltriethoxysilane *2: 3-Glycidoxypropyltrimethoxysilane *3: 3-Isocyanatopropyltrithoxysilane *4: N,N-Bis(trimethylsilyl)aminopropyltriethoxysilane *5: N-(1,3-Dimethylbutildene)-3-(triethoxysilyl)-2-propanoamine | | | | | | | | | | |

**TABLE 2**

| | | Example 4 | Example 5 | Example 6 | Comparative Example 7 | Comparative Example 8 | Comparative Example 9 | Example 7 | Example 8 | Comparative Example 10 |
|---|---|---|---|---|---|---|---|---|---|---|
| Copolymer | | M | N | O | P | Q | R | S | T | U |
| Component | | | | | | | | | | |
| Solvent cyclohexane | (g) | 2750 | 2750 | 2750 | 2750 | 2750 | 2750 | 2750 | 2750 | 2750 |
| Vinyl content adjustment agent | | | | | | | | | | |
| Tetrahydrofuran | (g) | 41.3 | 41.3 | 41.3 | 41.3 | 41.3 | 41.3 | 41.3 | 41.3 | 19.3 |
| Monomer | | | | | | | | | | |
| Styrene | (g) | 125 | 125 | 125 | 125 | 125 | 125 | 125 | 125 | 180 |
| Butadiene | (g) | 375 | 375 | 375 | 375 | 375 | 375 | 375 | 375 | 320 |
| Initiator | | | | | | | | | | |
| n-Butyllithium | (mg) | 215 | 215 | 215 | 215 | 215 | 215 | 215 | 215 | 215 |
| Modifier | | | | | | | | | | |
| MTES*¹ | (mg) | | | | | | | | | |
| GPMOS*² | (mg) | | | | | | | | | |
| N-Si-1*³ | (mg) | | | | | | | | | |
| N-Si-2*⁴ | (mg) | 1231 | 1231 | 1231 | 1231 | 1231 | 1231 | | | |
| N-Si-3*⁵ | (mg) | | | | | | | 10191019 | 1019 | 1019 |
| Additive | | | | | | | | | | |
| Zirconium bis(2-ethylhexanoate) oxide | (g) | 3.97 | | | | | | 3.97 | | |
| Bismuth tris(2-ethylhexanoate) | (g) | | 6.45 | | | | | | 6.45 | |
| Tri-sec-butoxyaluminum | (g) | | | 2.49 | | | | | | |
| Tin 2-ethylhexanoate | (g) | | | | | 4.09 | | | | |
| Tetrabutoxytitanium | (g) | | | | | | 3.44 | | | |

| | | | | | | | | | | |
|---|---|---|---|---|---|---|---|---|---|---|
| *1: Methyltriethoxysilane *2: 3-Glycidoxypropyltrimethoxysilane *3: 3-Isocyanatopropyltriethoxysilane *4: N,N-Bis(trimethylsilyl)aminopropyltriethoxysilane *5: N-(1,3-Dimethylbutylidene)-3-(triethoxysilyl)-2-propanamine | | | | | | | | | | |

**TABLE 3**

| | | Reference Example 1 | Reference Example 2 | Reference Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Copolymer | | A | B | C | D | E | F | G | H | I |
| Polymer molecular properties | | | | | | | | | | |
| Styrene content | (wt%) | 20 | 20 | 20 | 21 | 20 | 19 | 20 | 20 | 20 |
| Vinyl content | (%) | 59 | 60 | 58 | 58 | 58 | 58 | 59 | 57 | 58 |
| Glass transition temperature | (°C) | -35 | -35 | -35 | -36 | -34 | -34 | -35 | -35 | -35 |
| Mooney viscosity | | 68 | 67 | 20 | 33 | 64 | 29 | 78 | 75 | 45 |

**TABLE 4**

| | | Example 4 | Example 5 | Example 6 | Comparative Example 7 | Comparative Example 8 | Comparative Example 9 | Example 7 | Example 8 | Comparative Example 10 |
|---|---|---|---|---|---|---|---|---|---|---|
| Copolymer | | M | N | O | P | Q | R | S | T | U |
| Polymer molecular properties | | | | | | | | | | |
| Styrene content | (wt%) | 20 | 20 | 20 | 21 | 20 | 19 | 20 | 20 | 20 |
| Vinyl content | (%) | 59 | 60 | 58 | 58 | 58 | 58 | 59 | 57 | 58 |
| Glass transiton temperature | (°C) | -35 | -35 | -35 | -36 | -35 | -34 | -35 | -35 | -35 |
| Mooney viscosity | | 76 | 71 | 18 | 39 | 64 | 27 | 64 | 65 | 28 |

**TABLE 5**

| Component | PHR |
|---|---|
| Copolymer | 70 |
| Polybutadiene rubber*¹ | 30 |
| Extender oil*² | 37.5 |
| Silica*³ | 70 |
| Carbon black*⁴ | 5.6 |
| Silane coupling agent*⁵ | 5.6 |
| Stearic acid | 2 |
| Aging preventive*⁶ | 1 |
| Zinc oxide | 3 |
| Vulcanizatian accelerator NS*⁷ | 1.5 |
| Vulcanization accelerator CZ*⁸ | 1.8 |
| Sulfur | 1.5 |

| | |
|---|---|
| *1: "BR01" manufactured by JSR Corporation *2: "Aromax #3" manufacfured by Fuji Kosan Co., Ltd. *3: "Nipsil AQ" manufactured by Nippon Silica Industrial Co. Ltd. *4: "Diablack N339" manufactured by Mitsubishi Chemical Corp. *5: "Si69" manufactured by Degussa *6: "Nocrac 810NA" manufactured by Ouchi Shinko Chemical Industrial Co., Ltd. *7: "Nocceler NS-F" manufactured by Ouchi Shinko Chermical Industrial Co., Ltd. *9. "Nocceler CZ" manufactured by Ouchi Shinko Chemical Industrial Co., Ltd. | |

**TABLE 6**

| | | Example 9 | Example 10 | Example 11 | Comparative Example 11 | Comparative Example 12 | Comparative Example 13 | Comparative Example 14 | Comparative Example 15 | Comparative Example 16 |
|---|---|---|---|---|---|---|---|---|---|---|
| Vulcanization properties (PSR) | Copolymer | A | B- | C | D | E | F | G | H | I |
| Tensile strength | (Index) | 111 | 112 | 111 | 102 | 105 | 104 | 112 | 112 | 104 |
| tanδ (0°C) | (Index) | 114 | 112 | 110 | 102 | 106 | 107 | 116 | 115 | 106 |
| tanδ (50°C) | (Index) | 115 | 113 | 111 | 103 | 107 | 107 | 117 | 114 | 105 |
| Wear resistance | (Index) | 113 | 111 | 109 | 101 | 105 | 105 | 115 | 112 | 105 |

**TABLE 7**

| | | Example 12 | Example 13 | Example 14 | Comparative Example 17 | Comparative Example 18 | Comparative Example 19 | Example 15 | Example 16 | Comparative Example 20 | Comparative Example 21 |
|---|---|---|---|---|---|---|---|---|---|---|---|
| Vulcenization properties (PSR) | Copolymer | M | N | O | P | Q | R | S | T | U | V*¹ |
| Tensile strength | (Index) | 115 | 114 | 112 | 110 | 111 | 111 | 113 | 111 | 108 | 100 |
| tanδ (0°C) | (Index) | 134 | 130 | 125 | 118 | 120 | 121 | 121 | 119 | 115 | 100 |
| tanδ (50°C) | (Index) | 141 | 137 | 130 | 121 | 125 | 126 | 125 | 121 | 118 | 100 |
| Wear resistance | (Index) | 127 | 123 | 120 | 112 | 116 | 116 | 119 | 113 | 105 | 100 |

### Examples 17 to 21 and Comparative Examples 22 to 26

Compositions containing carbon black were prepared according to Table 8 using the polymers J to U of Examples 4 to 8 and Comparative Examples7 to 10. In Table 8, a polymer V (^{*1}) used in Comparative Example 26 is a commercially available SBR (JSR SL563) manufactured by JSR Corporation.

Each unvulcanized rubber composition was vulcanized. The properties of the resulting vulcanized rubber were evaluated. The results are shown in Table 9. Each value shown in Table 9 is a relative value with respect to the value (100) of Comparative Example 26.

**TABLE 8**

| Component | PHR |
|---|---|
| Copolymer | 80 |
| Polybutadiene rubber*¹ | 20 |
| Carbon black*² | 50 |
| Stearic acid | 2 |
| Aging preventive 6C*³ | 1 |
| Zinc oxide | 3 |
| Vulcanization accelerator DPG*⁴ | 0.5 |
| Vulcanization accelerator DM*⁵ | 0.5 |
| Vulcanization accelerator NS*⁶ | 0.5 |
| Sulfur | 1.5 |

| | |
|---|---|
| *1: "IR2200" manufactured by JSR Corporation *2: "Diablack N339" manufactured by Mitsubishi Chemical Corp. *3: "Ozonone 6C" manufactured by Seiko Chemical Co,. Ltd. *4: "Nocceler D" manufactured by Ouchi Shinko Chemical Industrial Co., Ltd. *5: "Nocceler DM" manufactured by Ouchi Shinko Chemical Industrial Co., Ltd. *6: "Nocceler CZ" manufactured by Ouchi Shinko Chemical Industrial Co., Ltd. | |

**TABLE 9**

| | | Example 17 | Example 18 | Example 19 | Comparative Example 22 | Comparative Example 23 | Comparative Example 24 | Example 20 | Example 21 | Comparative Example 25 | Comparative Example 26 |
|---|---|---|---|---|---|---|---|---|---|---|---|
| Vulcanization properties (PSR) | Copolymer | M | N | O | P | Q | R | S | T | U | V |
| Tensile strength | (Index) | 108 | 106 | 105 | 103 | 104 | 104 | 104 | 103 | 102 | 100 |
| tanδ (0°C) | (Index) | 123 | 121 | 120 | 108 | 113 | 118 | 111 | 109 | 104 | 100 |
| tanδ (50°C) | (Index) | 128 | 126 | 124 | 112 | 116 | 120 | 114 | 111 | 106 | 100 |
| Wear resistance | (Index) | 121 | 118 | 120 | 110 | 113 | 115 | 116 | 110 | 105 | 100 |

As is clear from the results of Examples 17 to 21 and Comparative Examples 22 to 26, an increase in tensile strength, a decrease in rolling resistance, and a remarkable increase in wet-skid resistance and wear resistance were achieved in the compositions containing carbon black by adding zirconium bis(2-ethylhexanoate) oxide, bismuth 2-ethylhexanoate, or tri-sec-butoxyaluminum as the condensation accelerator.

### INDUSTRIAL APPLICABILITY

A rubber composition that exhibits low rolling resistance, high tensile strength, excellent wet-skid resistance, and excellent wear resistance can be obtained by adding silica and/or carbon black to the modified conjugated diene polymer obtained according to the present invention, and vulcanizing the resulting product to produce a vulcanized rubber.

Therefore, the rubber composition that includes the modified conjugated diene polymer obtained according to the present invention is suitably used for tire applications (e.g., tire tread, under-tread, carcass, side wall, and bead) and other industrial products (e.g., rubber vibration insulator, fender, belt, and hose). In particular, the rubber composition is suitably used as a tire tread rubber.

## Claims

1. A process for producing a modified polymer, the process comprising:
subjecting an alkali metal active end of a conjugated diene polymer to a modification reaction with an alkoxysilane compound, the conjugated diene polymer being produced by subjecting a diene monomer or a diene monomer and a monomer other than the diene monomer to anionic polymerization in a hydrocarbon solvent using an alkali metal initiator; and
subjecting the resulting product to a condensation reaction in the presence of a condensation accelerator that includes a compound of zirconium (Zr), bismuth (Bi), or aluminum (Al),
wherein the alkoxysilane compound is at least one alkoxysilane compound shown by the following general formula (II) and/or partial condensates thereof, 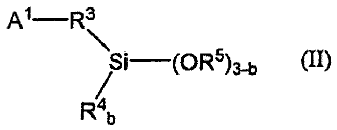 wherein A¹ represents a monovalent group having at least one functional group selected from an imine group, a cyano group, a cyclic tertiary amine group, a noncyclic tertiary amine group, a pyridine group, a silazane group, and a bisulfide group, R³ represents a single bond or a divalent hydrocarbon group, R⁴ and R⁵ individually represent a monovalent aliphatic hydrocarbon group having 1 to 20 carbon atoms or a monovalent aromatic hydrocarbon group having 6 to 18 carbon atoms, and b represents an integer from 0 to 2, provided that, when a plurality of OR⁵s are present, the plurality of OR⁵s may be the same or different, and an active proton is not included in the molecule.

2. The process according to claim 1, wherein the compound included in the condensation accelerator is an alkoxide, a carboxylate, or an acetylacetonato complex salt of the element.

3. The process according to claim 1 or 2, wherein the condensation accelerator includes at least one compound selected from (a) a bismuth carboxylate, (b) a zirconium alkoxide, (c) a zirconium carboxylate, (d) an aluminum alkoxide, and (e) an aluminum carboxylate.

4. The process according to any one of claims 1 to 3, wherein the polymer is synthesized by anionic polymerization, and the monomer other than the diene monomer is an aromatic vinyl compound.

5. The process according to any one of claims 1 to 4, wherein the diene monomer is at least one conjugated diene compound selected from 1,3-butadiene, isoprene, and 2,3-dimethyl-1,3-butadiene.

6. The process according to claim 4 or 5, wherein the aromatic vinyl compound is styrene.

7. A modified polymer produced by the process according to any one of claims 1 to 6.

8. A rubber composition comprising the modified polymer according to claim 7.

9. A rubber composition comprising 100 parts by mass of a rubber component and 20 to 120 parts by mass of silica and/or carbon black, the rubber component including the modified polymer according to claim 7 in an amount of 20 mass% or more.

10. The rubber composition according to claim 8 or 9, wherein the rubber component includes 20 to 100 mass% of the modified polymer and 0 to 80 mass% of at least one rubber selected from the group consisting of a natural rubber, a synthetic isoprene rubber, a butadiene rubber, a styrenebutadiene rubber, an ethylene-α-olefin copolymer rubber, an ethylene-α-olefin-diene copolymer rubber, an acrylonitrile-butadiene copolymer rubber, a chloroprene rubber, and a halogenated butyl rubber (modified polymer + rubber other than the modified polymer = 100 mass%).

## Patentansprüche

1. Verfahren zum Herstellen eines modifizierten Polymers, wobei das Verfahren umfasst:
Unterwerfen eines Alkalimetall-aktiven Endes eines konjugiertes-Dien-Polymers einer Modifikationsreaktion mit einer Alkoxysilanverbindung, wobei das konjugiertes-Dien-Polymer durch Unterwerfen eines Dienmonomers oder eines Dienmonomers und eines anderen Monomers als das Dienmonomer einer anionischen Polymerisation in einem Kohlenwasserstofflösungsmittel unter Verwendung eines Alkalimetallinitiators hergestellt ist; und
Unterwerfen des resultierenden Produkts einer Kondensationsreaktion in der Gegenwart eines Kondensationsbeschleunigers, der eine Verbindung von Zirkon (Zr), Bismuth (Bi) oder Aluminium (Al) enthält,
wobei die Alkoxysilanverbindung zumindest eine Alkoxysilanverbindung ist, die durch die folgende allgemeine Formel (II) gezeigt ist, und/oder partielle Kondensate davon, 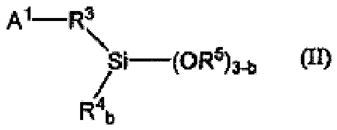 wobei A¹ eine monovalente Gruppe darstellt, die zumindest eine funktionelle Gruppe ausgewählt aus einer Imingruppe, einer Cyanogruppe, einer cyclischen tertiären Aminogruppe, einer nicht cyclischen tertiären Aminogruppe, einer Pyridingruppe, einer Silazangruppe und einer Bisulfidgruppe aufweist, R³ eine Einfachbindung oder eine divalente Kohlenwasserstoffgruppe darstellt, R⁴ und R⁵ individuell eine monovalente aliphatische Kohlenwasserstoffgruppe mit 1 bis 20 Kohlenstoffatomen oder eine monovalente aromatische Kohlenwasserstoffgruppe mit 6 bis 18 Kohlenwasserstoffatomen darstellen, und b eine ganze Zahl von 0 bis 2 darstellt, vorausgesetzt, dass, wenn mehrere OR⁵ vorhanden sind, die mehreren OR⁵ gleich oder unterschiedlich sein können und ein aktives Proton nicht in dem Molekül enthalten ist.

2. Verfahren nach Anspruch 1, wobei die in dem Kondensationsbeschleuniger enthaltene Verbindung ein Alkoxid, ein Carboxylat oder ein Acetylacetonatkomplexsalz des Elements ist.

3. Verfahren nach Anspruch 1 oder 2, wobei der Kondensationsbeschleuniger zumindest eine Verbindung enthält, ausgewählt aus (a) einem Bismuthcarboxylat, (b) einem Zirkonalkoxid, (c) einem Zirkoncarboxylat, (d) einem Aluminiumalkoxid und (e) einem Aluminiumcarboxylat.

4. Verfahren nach einem der Ansprüche 1 bis 3, wobei das Polymer durch anionische Polymerisation synthetisiert wird, und das andere Monomer als das Dienmonomer eine aromatische Vinylverbindung ist.

5. Verfahren nach einem der Ansprüche 1 bis 4, wobei das Dienmonomer zumindest eine konjugierte Dienverbindung ist, ausgewählt aus 1,3-Butadien, Isopren und 2,3-Dimethyl-1,3-butadien.

6. Verfahren nach Anspruch 4 oder 5, wobei die aromatische Vinylverbindung Styrol ist.

7. Modifiziertes Polymer, das durch das Verfahren nach einem der Ansprüche 1 bis 6 hergestellt ist.

8. Kautschukzusammensetzung, die das modifizierte Polymer nach Anspruch 7 umfasst.

9. Kautschukzusammensetzung, die 100 Masseteile eines Kautschukbestandteils und 20 bis 120 Masseteile an Siliziumoxid und/oder Kohleschwarz umfasst, wobei der Kautschukbestandteil das modifizierte Polymer nach Anspruch 7 in einer Menge von 20 Masse-% oder mehr enthält.

10. Kautschukzusammensetzung nach Anspruch 8 oder 9, wobei der Kautschukbestandteil 20 bis 100 Masse-% des modifizierten Polymers und 0 bis 80 Masse-% zumindest eines Kautschuks ausgewählt aus der Gruppe bestehend aus einem natürlichen Kautschuk, einem synthetischen Isopren-Kautschuk, einem Butadien-Kautschuk, einem Styrol-Butadien-Kautschuk, einem Ethylen-α-Olefin-Copolymer-Kautschuk, einem Ethylen-α-Olefin-Dien-Copolymer-Kautschuk, einem Acrylonitril-Butadien-Copolymer-Kautschuk, einem Chloropren-Kautschuk und einem halogenierten Butyl-Kautschuk enthält (modifiziertes Polymer + anderer Kautschuk als das modifizierte Polymer = 100 Masse-%).

## Revendications

1. Procédé de production d'un polymère modifié, le procédé comprenant :
la soumission d'une extrémité active de métal alcalin d'un polymère de diène conjugué à une réaction de modification avec un composé alcoxysilane, le polymère de diène conjugué étant produit en soumettant un monomère diène ou un monomère diène et un monomère autre que le monomère diène à une polymérisation anionique dans un solvant hydrocarbure en utilisant un initiateur métal alcalin ; et
la soumission du produit résultant à une réaction de condensation en présence d'un accélérateur de condensation qui inclut un composé de zirconium (Zr), de bismuth (Bi), ou d'aluminium (Al),
dans lequel le composé alcoxysilane est au moins un composé alcoxysilane montré par la formule générale (II) suivante et/ou des condensats partiels de celui-ci, 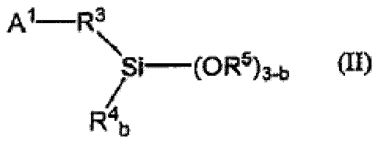 dans laquelle A¹ représente un groupe monovalent ayant au moins un groupe fonctionnel choisi parmi un groupe imine, un groupe cyano, un groupe amine tertiaire cyclique, un groupe amine tertiaire non cyclique, un groupe pyridine, un groupe silazane, et un groupe bisulfure, R³ représente une liaison simple ou un groupe hydrocarbure divalent, R⁴ et R⁵ représentent individuellement un groupe hydrocarbure aliphatique monovalent ayant 1 à 20 atomes de carbone ou un groupe hydrocarbure aromatique monovalent ayant 6 à 18 atomes de carbone, et b représente un entier de 0 à 2, sous réserve que, lorsqu'une pluralité d'OR⁵ sont présents, la pluralité d'OR⁵ peuvent être identiques ou différents, et un proton actif n'est pas inclus dans la molécule.

2. Procédé selon la revendication 1, dans lequel le composé inclus dans l'accélérateur de condensation est un alcoxyde, un carboxylate, ou un sel complexe acétylacétonato de l'élément.

3. Procédé selon la revendication 1 ou 2, dans lequel l'accélérateur de condensation inclut au moins un composé choisi parmi (a) un carboxylate de bismuth, (b) un alcoxyde de zirconium, (c) un carboxylate de zirconium, (d) un alcoxyde d'aluminium, et (e) un carboxylate d'aluminium.

4. Procédé selon l'une quelconque des revendications 1 à 3, dans lequel le polymère est synthétisé par polymérisation anionique, et le monomère autre que le monomère diène est un composé vinylique aromatique.

5. Procédé selon l'une quelconque des revendications 1 à 4, dans lequel le monomère diène est au moins un composé de diène conjugué choisi parmi le 1,3-butadiène, l'isoprène, et le 2,3-diméthyl-1,3-butadiène.

6. Procédé selon la revendication 4 ou 5, dans lequel le composé vinylique aromatique est le styrène.

7. Polymère modifié produit par le procédé selon l'une quelconque des revendications 1 à 6.

8. Composition de caoutchouc comprenant le polymère modifié selon la revendication 7.

9. Composition de caoutchouc comprenant 100 parties en masse d'un composant caoutchouc et 20 à 120 parties en masse de silice et/ou de noir de carbone, le composant caoutchouc incluant le polymère modifié selon la revendication 7 dans une quantité de 20% en masse ou plus.

10. Composition de caoutchouc selon la revendication 8 ou 9, dans laquelle le composant caoutchouc inclut 20 à 100% en masse du polymère modifié, et 0 à 80% en masse d'au moins un caoutchouc choisi parmi le groupe consistant en un caoutchouc naturel, un caoutchouc isoprène synthétique, un caoutchouc butadiène, un caoutchouc styrène-butadiène, un caoutchouc copolymère d'éthylène-α-oléfine, un caoutchouc copolymère d'éthylène-α-oléfine-diène, un caoutchouc copolymère d'acrylonitrile-butadiène, un caoutchouc chloroprène et un caoutchouc butylique halogéné (polymère modifié + caoutchouc autre que le polymère modifié = 100% en masse).
